# EUROPEAN PATENT APPLICATION

(11) **EP 3 871 854 A1**
(43) Date of publication of application: **01.09.2021**
(21) Application number: 20159888.5
(22) Date of filing: 27.02.2020
(51) Int. Cl.: B29C 44/50, B29C 44/34, B29C 48/00

(54) **PET FOAM EXTRUDER**

(71) Applicant: Xioasha, Tian, Dallas, Texas 75243 (US)
(72) Inventor: Xioasha, Tian, Dallas, Texas 75243 (US)
(74) Representative: Lecomte & Partners

(57) **Abstract**

A method to manufacture a polyethylene terephthalate (PET) foam board, includes forming a PET mixture (403); passing the PET mixture through a plank extruder (405); heating the PET mixture as it travels through the plank extruder (407); forming a PET foam sheet via the plank extruder (409); and cooling the PET forma sheet with a roller system (411).

## Description

### BACKGROUND

### 1. Field of the Invention

The present invention relates generally to polyethylene terephthalate (PET) materials, and more specifically to a high-density PET foam board and method of manufacturing the same.

### 2. Description of Related Art

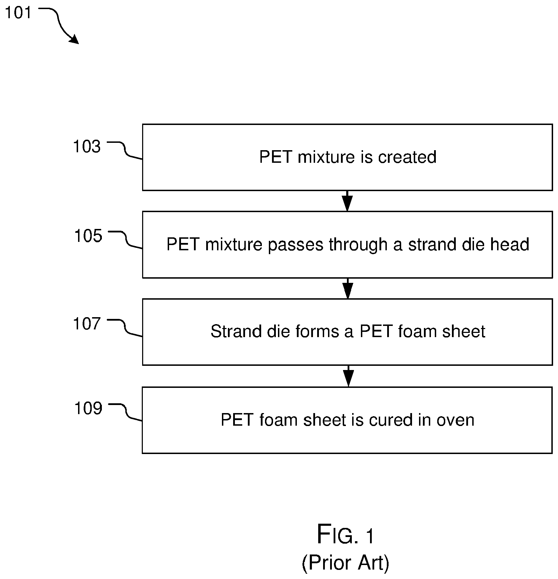

PET material is well known in the art and is one of the most common thermoplastics polymer resin of the polyester family and is found in fiber for clothing, containers for liquid and foods, thermoforming for manufacturing, and so forth. In one application of use, the PET material is used to form foam boards. FIG. 1 is a simplified flowchart depicting a conventional process to manufacture PET boards and includes the process of mixing together one or more PET materials and thereafter extruding the mixture through a strand die, as depicted in boxes 103, 105. Thereafter, the strand die forms a sheet of foam material with the extruded PET material that is subsequently heated in an over during the curing process.

One of the problems commonly associated with the conventional process to create the PET foam boards is the limited use. For example, the foam boards created from the strand die manufacturing processes provide efficient stress resistance along one axis (e.g., z-axis) of movement. However, the conventional foam board will typically fail as stress is applied to the x-axis and the y-axis; this is due to the formation of the foam board via the strand die method of formation.

Although great strides have been made in the area of manufacturing PET foam boards, many shortcomings remain.

### DESCRIPTION OF THE DRAWINGS

The novel features believed characteristic of the embodiments of the present application are set forth in the appended claims. However, the embodiments themselves, as well as a preferred mode of use, and further objectives and advantages thereof, will best be understood by reference to the following detailed description when read in conjunction with the accompanying drawings, wherein:
FIG. 1 is a flowchart of a conventional process to manufacture PET foam boards;
FIG. 2 is a simplified schematic of a system and method of use in accordance with a preferred embodiment of the present application;
FIG. 3 is a side view of a roller system of the system of FIG. 2;
FIG. 4 is a flowchart depicting the preferred process;
FIG. 5 is a cross-sectional view of a conventional PET foam board manufactured via a strand die process;
FIG. 6 is a cross-sectional view of a PET foam board of the present invention; and
FIG. 7 is a flowchart depicting a manufacturing process.

While the system and method of use of the present application is susceptible to various modifications and alternative forms, specific embodiments thereof have been shown by way of example in the drawings and are herein described in detail. It should be understood, however, that the description herein of specific embodiments is not intended to limit the invention to the particular embodiment disclosed, but on the contrary, the intention is to cover all modifications, equivalents, and alternatives falling within the spirit and scope of the present application as defined by the appended claims.

### DETAILED DESCRIPTION OF THE PREFERRED EMBODIMENT

Illustrative embodiments of the system and method of use of the present application are provided below. It will of course be appreciated that in the development of any actual embodiment, numerous implementation-specific decisions will be made to achieve the developer's specific goals, such as compliance with system-related and business-related constraints, which will vary from one implementation to another. Moreover, it will be appreciated that such a development effort might be complex and time-consuming, but would nevertheless be a routine undertaking for those of ordinary skill in the art having the benefit of this disclosure.

The system and method of use in accordance with the present application overcomes one or more of the above-discussed problems commonly associated with conventional PET foam board manufacturing processes. Specifically, the system and method of the present application provides rapid and effective means to manufacture PET foam boards through a plank extrusion process that provides double the strength in the x-axis and the y-axis. It will be appreciated that the foam board of the present application can be used immediately after the room temperature cure process. The entire process is around 40 minutes to complete. These and other unique features of the system and method of use are discussed below and illustrated in the accompanying drawings.

The system and method of use will be understood, both as to its structure and operation, from the accompanying drawings, taken in conjunction with the accompanying description. Several embodiments of the system are presented herein. It should be understood that various components, parts, and features of the different embodiments may be combined together and/or interchanged with one another, all of which are within the scope of the present application, even though not all variations and particular embodiments are shown in the drawings. It should also be understood that the mixing and matching of features, elements, and/or functions between various embodiments is expressly contemplated herein so that one of ordinary skill in the art would appreciate from this disclosure that the features, elements, and/or functions of one embodiment may be incorporated into another embodiment as appropriate, unless described otherwise.

The preferred embodiment herein described is not intended to be exhaustive or to limit the invention to the precise form disclosed. It is chosen and described to explain the principles of the invention and its application and practical use to enable others skilled in the art to follow its teachings.

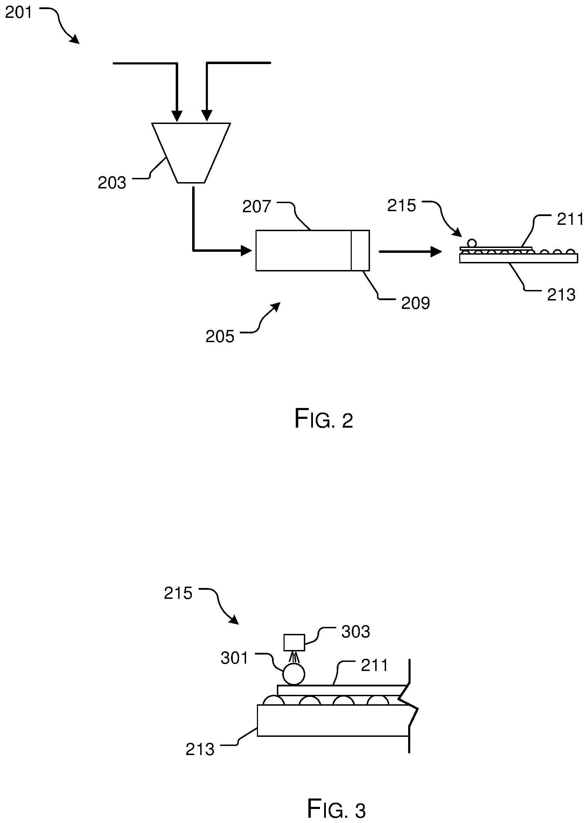

Referring now to the drawings wherein like reference characters identify corresponding or similar elements throughout the several views, FIG. 2-4 depicts various simplified views of a system 201 and method of use in accordance with a preferred embodiment of the present application. It will be appreciated that system 201 overcomes one or more of the above-listed problems commonly associated with the conventional PET foam board manufacturing processes.

In the contemplated embodiment, system 201 includes one or more of a mixer 203 configured to receive one or more materials to form a PET mixture. The PET mixture is composed of materials that enable the PET material to extrude through the plank die and to thereafter cure at room temperature. After the PET foam mixture is created, it leaves the mixer 203 and enters into a plank die 205 having an elongated body 207 with a plank die head 209 at one end. It should be understood that heat is applied to the PET mixture as it travels through the body 207 of the extruder 205. The extruded PET mixture is then formed and leaves the extruder as a foam board 211 having a high density and configured to withstand loads along all axes. The foam board 211 rolls along a roller bed 213 and is treated with a roller system 215.

In FIG. 3, the features of the roller system 215 are shown having one or more of a cooling roller 311 that comes into contact with the board 211 and is configured to both press thereagainst and cool the board as it travels along the roller bed 213.

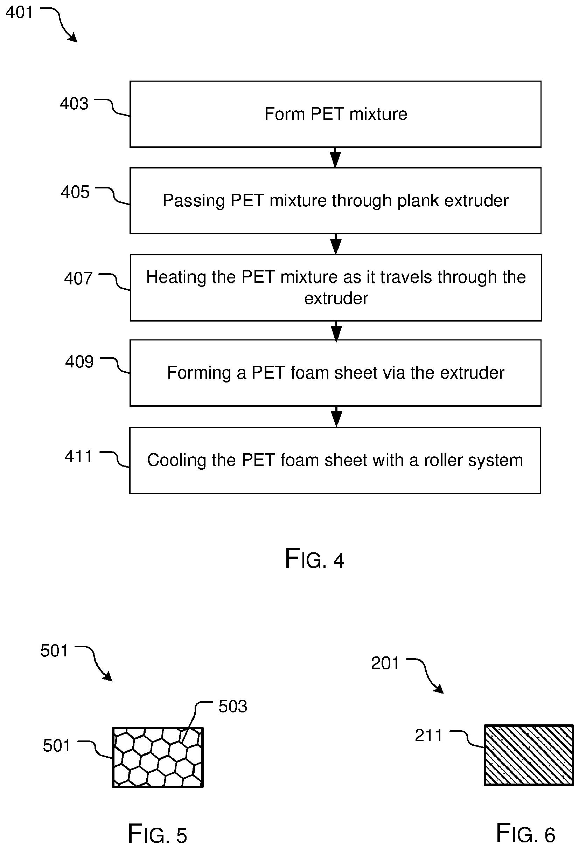

The preferred method of manufacturing the foam board is shown in FIG. 4. Flowchart 401 includes the preferred manufacturing process comprising the steps of first forming the PET mixture and passing the mixture through the plank extruder to form a plank foam board, as depicted in boxes 403, 405. Thereafter, the PET mixture is heated as it travels through the extruder, as depicted by box 407. The PET foam sheet is formed and thereafter cooled via the roller system, as depicted in boxes 409, 411.

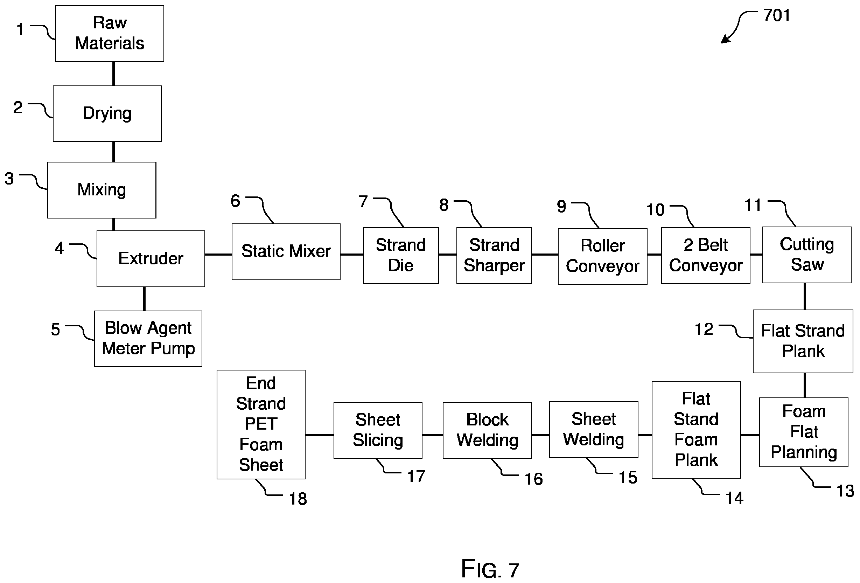

In FIG. 5, the conventional PET foam board 501 is shown having a body 503 with a plurality of extruded sections 505 that are thermally bonded to each other during the extrusion process. It should be understood that the bond formed between the plurality of extruded sections limits the structural strength of the board in the y- and z-axis. The foam board from the strand die process must be bonded into a block, then cut again in the vertical direction. In FIG. 7, the process of manufacturing the strand die foam board is shown as flowchart 701 which includes 18 steps to form the strand board.

In FIG. 6, a cross-sectional front view of the board 211 along the z-axis is shown. It should be understood that the preferred process of manufacturing creates a board with a single core section as compared to the multi-core section of the conventional board 501. Accordingly, the board of the present application provides more effective means to resist forces applied in the x-axis and the y-axis.

The particular embodiments disclosed above are illustrative only, as the embodiments may be modified and practiced in different but equivalent manners apparent to those skilled in the art having the benefit of the teachings herein. It is therefore evident that the particular embodiments disclosed above may be altered or modified, and all such variations are considered within the scope and spirit of the application. Accordingly, the protection sought herein is as set forth in the description. Although the present embodiments are shown above, they are not limited to just these embodiments, but are amenable to various changes and modifications without departing from the spirit thereof.

## Claims

1. A method, comprising:
forming a mixture composed of polyethylene terephthalate material;
passing the mixture through a plank extruder;
heating the mixture as it travels through the plank extruder;
forming a foam sheet via the plank extruder; and
cooling the foam sheet with a roller system.
